# EUROPEAN PATENT APPLICATION

(11) **EP 3 456 589 A1**
(43) Date of publication of application: **20.03.2019**
(21) Application number: 18193478.7
(22) Date of filing: 10.09.2018
(51) Int. Cl.: B60R 9/045, B60R 9/055

(54) **A MOUNTING SYSTEM FOR MOUNTING A LOAD ON A ROOF RACK OF A VEHICLE**

(30) Priority: 15.09.2017 SE 1751132
(71) Applicant: Stigås, Robin, 824 60 Forsa (SE)
(72) Inventor: Stigås, Robin, 824 60 Forsa (SE)
(74) Representative: Bjerkéns Patentbyrå KB (Gävle)

(57) **Abstract**

A mounting system for mounting a load (2) on a roof rack of a vehicle (1), comprising a front and rear attachment device (10, 11), each comprising a lower support member (12, 21) for attachment to a bar (8, 9) of the roof rack, an upper support member (13, 22) for supporting the load, and a connection member (14, 23) connecting the support members so that the upper support member is movable in a longitudinal direction (D) and pivotable around a transverse axis of rotation. The connection member of the rear attachment device allows an upward movement of the upper support member relative to the lower support member so that the load is movable between a lowered position parallel to the longitudinal direction and a tilted position in which the load is tilted and moved forward with respect to the lowered position, so that a rear portion (3) of the load is elevated relative to a front portion (4).

## Description

### TECHNICAL FIELD

The present invention relates to a mounting system for mounting a load on a roof rack of a vehicle according to the preamble of claim 1. The load may in particular, but not exclusively, be in the form of a car roof box intended for carrying cargo on the roof of a passenger car. It may also be in the form of another long object such as a ladder or a canoe.

### BACKGROUND AND PRIOR ART

It is sometimes necessary for vehicle users to mount relatively long objects on top of the vehicle roof, such as a car roof box intended for carrying cargo on the roof of a passenger car. The car roof box increases the available space for cargo and is therefore commonly used when it is necessary to carry more cargo than can be fitted in a rear luggage compartment of the car. However, a car roof box that has been mounted on a roof rack of the car may typically interfere with access to the rear luggage compartment. In particular, this problem may arise when the luggage compartment is closed by means of a closure hinged at its upper end, which in this case may be prevented from being fully opened by the rear end of the car roof box. Since the car roof box and the luggage compartment is often simultaneously used, this situation is problematic for the user of the car.

Different solutions have previously been proposed to overcome this problem.

GB2534581 discloses a roof rack which includes tilting means for tilting a load mounted on the vehicle roof as the rear closure is opened. The tilting is accomplished by raising a rear end of the roof rack. A front end of the roof rack is adapted to allow forward movement of the load as the rear end is raised.

EP1707439 discloses a tiltable roof rack having a fixed frame which is fastened to the vehicle roof, and a movable support adapted to carry a ladder. The movable support is tiltably connected to the fixed frame at a front end of the roof rack, so that a rear end of the movable support can be lifted with respect to the front end and the fixed frame.

### SUMMARY OF THE INVENTION

It is a primary object of the present invention to provide a mounting system that enables a load mounted on a vehicle roof to be tilted when a rear luggage compartment is to be opened, which mounting system is compatible for use with an existing roof rack of the vehicle, such as a standard roof rack comprising a front bar and a rear bar mounted on top of a passenger car.

At least the primary objective is achieved by means of the initially defined mounting system for mounting a load on a roof rack of a vehicle, which has the characterising features defined in claim 1. According to the invention, the mounting system comprises at least one front attachment device for attaching the load to a front bar of the roof rack and at least one rear attachment device for attaching the load to a rear bar of the roof rack. Each of the attachment devices for attaching the load comprises:
- a lower support member configured to be supported by and attached to one of the front bar and the rear bar,
- an upper support member configured to support the load,
- a connection member connecting the support members so that the upper support member is movable in the longitudinal direction and pivotable around at least one transverse axis of rotation relative to the lower support member,
wherein the connection member of the rear attachment device is further configured to allow an upward movement of the upper support member relative to the lower support member, so that the load, when mounted on the roof rack, is movable between a lowered position in which the load extends in or essentially in the longitudinal direction, and a tilted position in which the load is tilted and moved forward with respect to the lowered position, so that a rear portion of the load is elevated relative to a front portion of the load.

The mounting system according to the invention is mountable on a standard roof rack of a passenger car by means of the lower support member configured to be supported by and attached to one of the front bar and the rear bar. The lower support member may comprise means for attachment to the bars, which means are similar to means normally mounted on a car roof box, such as gripping members configured to grip around the bars and be locked in a gripping position. The mounting system thereby enables use of a standard roof rack for carrying a car roof box or another long object without interfering with access to a rear luggage compartment of the car. Since the load is fastened to the upper support members of the mounting system, its rear end can easily be lifted when the rear luggage compartment needs to be opened.

The lower support member may preferably be fixed with respect to the longitudinal direction of the vehicle. The lower support member may for example extend in parallel with the longitudinal direction regardless of whether the load is in the lowered or tilted position.

The at least one transverse axis is at least one horizontal axis normal to the longitudinal direction of the vehicle, i.e., usually extending in parallel with the front and rear bars.

The front attachment device may have configuration which is similar to or different from a configuration of the rear attachment device as long as both attachment devices allows the load to be tilted and moved forward in the longitudinal direction of the vehicle. In particular, the front connection member may have a different configuration than the rear connection member, since the front connection member, unlike the rear connection member, does not necessarily need to allow an upward movement of the entire upper support member. The forward movement of the front and rear upper support members enables a larger tilting angle, since a front end of the load can in this way be shifted forward over a wind shield of the vehicle when the load is tilted. It thereby also prevents damages to the vehicle roof.

According to one embodiment, in the lowered position, all of the upper support members extend in parallel with or essentially in parallel with all of the lower support members, and, in the tilted position, all of the upper support members are tilted and moved forward with respect to all of the lower support members, and, in the tilted position, the upper support member of the at least one rear attachment device is elevated relative to the lower support member of the at least one rear attachment device.

According to one embodiment, the upper support member has a shape that allows a fastening member of the load, which fastening member is adapted to be engaged with the front bar or the rear bar of the roof rack, to be engaged with the upper support member. The upper support member may e.g. comprise openings or through-holes defining a transverse bar element in the upper support member, around which bar element the fastening members of the load may grip. The connection member may, if interposed between the support members, be provided with an opening that allows the fastening member to grip around the bar element. In this way, the mounting system can easily be used together with existing roof racks and load fastening systems. The mounting system is thereby very versatile.

According to one embodiment, in the lowered position, the connection member is interposed between the upper support member and the lower support member. A space efficient construction, which is also robust thanks to the small number of movable joints, is thereby provided.

According to one embodiment, the connection member of the at least one front attachment device is configured to allow an upward movement of the entire upper support member relative to the lower support member. Additional space is thereby provided between the front end of the load and the vehicle roof in the tilted position. The front and rear connection members may in this embodiment be similarly designed, but differently dimensioned.

According to one embodiment, the connection member of the at least one front attachment device is configured to be movable only in the longitudinal direction with respect to the lower support member. Preferably, the connection member of the at least one front attachment device may be configured to be movable in the longitudinal direction by means of sliding. This allows the front upper support member to be shifted forward without being lifted. In this way, it is easier to move the load from the lowered position to the tilted position. The connection member may be configured to be slidable by means of a plain bearing, such as a linear bearing, or a rolling bearing.

According to one embodiment, the at least one rear attachment device further comprises a locking mechanism for preventing relative movement of the support members in the lowered position. Thus, the load can be efficiently locked in the lowered position during travel of the vehicle.

According to one embodiment, the connection member of the at least one rear attachment device has a first end pivotably connected to a rear end of the upper support member, and a second end pivotably connected to a front end of the lower support member. The connection member may in this embodiment be in the form of a rigid bar which is, when moving from the lowered to the tilted position, rotated forward and upward.

According to one embodiment, the at least one rear attachment device comprises a stopping mechanism configured to limit rotational motion of the connection member relative to the lower support member. The stopping mechanism may e.g. be in the form of a stopping surface. A predetermined maximum angle between the connection member and the lower support member may in this case be defined, which cannot be exceeded. The stopping mechanism may also prevent further forward movement. Of course, a similar stopping mechanism may be provided to limit rotational motion of the upper support member relative to the connection member.

Also the at least one front attachment device may be provided with a stopping mechanism to limit rotational motion of the connection member relative to the lower support member and/or of the upper support member relative to the connection member, depending on the configuration of the front attachment device.

According to one embodiment, the mounting system comprises at least two rear attachment devices and at least two front attachment devices. Access to the mounting system from each side of the vehicle can thereby be facilitated and the attachment devices can be made relatively small while a stable mounting of the load can be ensured.

Further advantages as well as advantageous features of the present invention will appear from the following detailed description.

### BRIEF DESCRIPTION OF THE DRAWINGS

Embodiments of the invention will in the following be described with reference to the appended drawings, in which:
- Fig. 1: is a side view of a vehicle provided with a mounting system according to an embodiment of the invention,
- Fig. 2: is another side view of the vehicle in fig. 1,
- Fig. 3: is a perspective view of the vehicle in fig. 1,
- Fig. 4: is a side view of a rear attachment device according to an embodiment,
- Fig. 5: is another side view of the rear attachment device in fig. 4,
- Fig. 6: is a perspective view of the rear attachment device in fig. 4,
- Fig. 7: is a perspective view of the rear attachment device in fig. 4,
- Fig. 8: is a perspective view of a front attachment device according to an embodiment,
- Fig. 9: is a perspective view of the front attachment device in fig. 8, and
- Fig. 10: is a perspective view a perspective view of the front attachment device in fig. 8.

### DETAILED DESCRIPTION OF EMBODIMENTS OF THE INVENTION

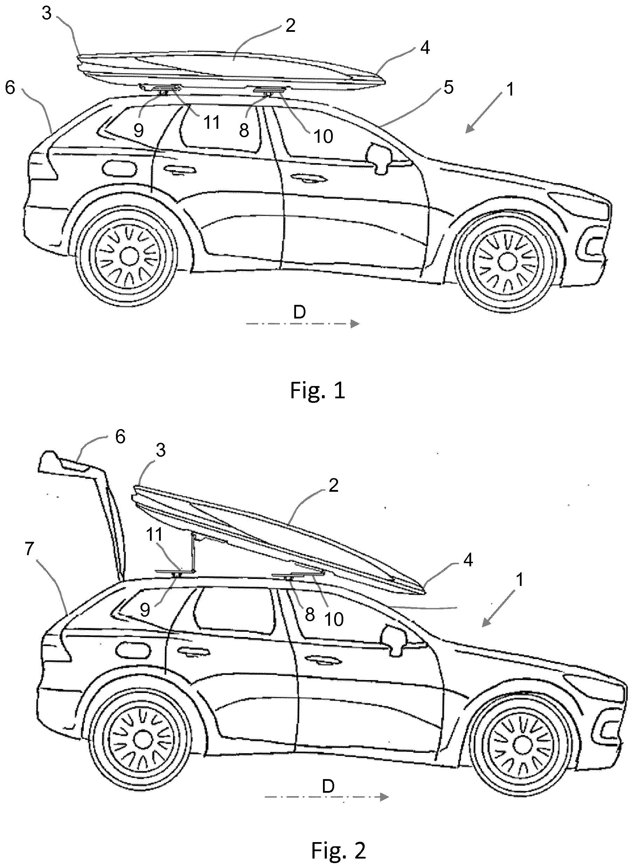

A vehicle 1 in the form of a passenger car on which a load 2 in the form of a car roof box is mounted by means of a mounting system according to an embodiment of the invention is shown in figs. 1-3. In fig. 1, the load 2 is in a lowered position, i.e. extending essentially in a longitudinal direction D of travel of the vehicle 1. In figs. 2-3, the load 2 is in a tilted position with respect to the longitudinal direction D, i.e. with a rear end 3 of the load 2 lifted with respect to a front end 4, and with the load 2 shifted forward over a windscreen 5 of the vehicle 1. A closure 6 of a rear luggage compartment 7 of the vehicle 1 may, with the load 2 in the tilted position, be fully opened.

The vehicle 1 is equipped with a roof rack comprising a front bar 8 and a rear bar 9 extending transversely with respect to the longitudinal direction D. The mounting system comprises two front attachment devices 10 for attaching the load 2 to the front bar 8 and two rear attachment devices 11 for attaching the load 2 to the rear bar 9.

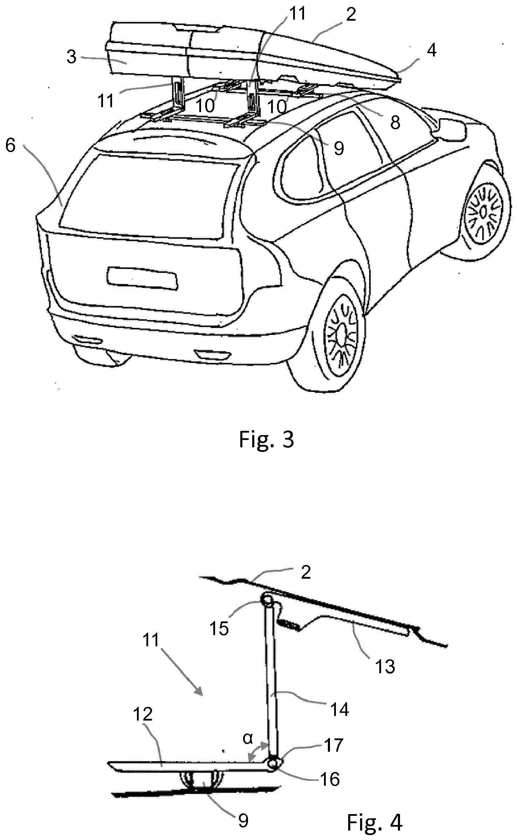

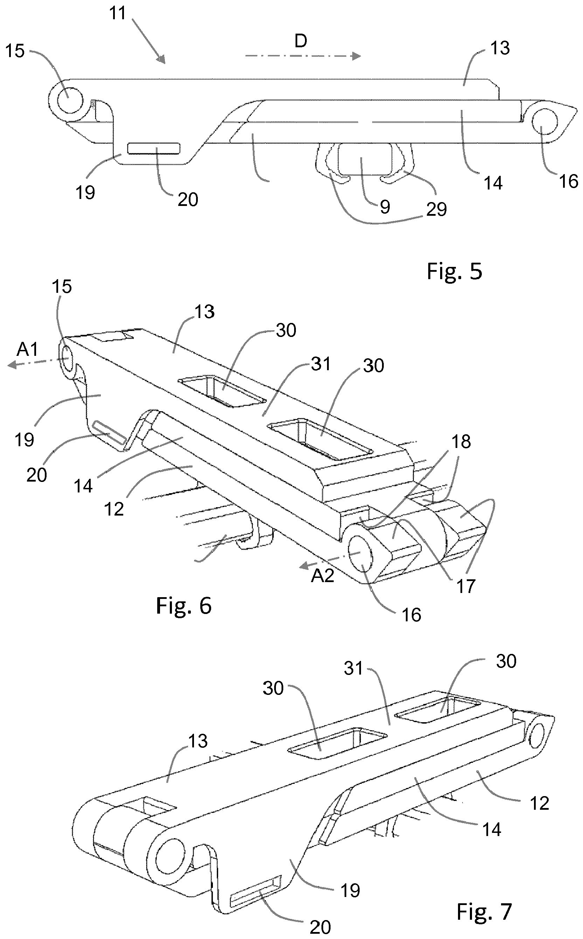

Reference is now made to figs. 4-7, in which one of the rear attachment devices 11 according to an embodiment is shown in greater detail. Each rear attachment device 11 comprises a lower support member 12 configured to be supported by and attached to the rear bar 9. It further comprises an upper support member 13 having a flat upper surface configured to support the load 2, and a connection member 14 connecting the lower and upper support members 12, 13. In the lowered position, shown in figs. 5-7, the upper support member 13, the connection member 14 and the lower support member 12 all have a primary extension in the longitudinal direction D. The connection member 14 is interposed between the upper support member 13 and the lower support member 12. A first end of the connection member 14 is pivotably connected to a rear end of the upper support member 13 by means of an upper hinge joint 15, so that the upper support member 13 can rotate around a first transverse axis of rotation A1 relative to the connection member 14. A second end of the connection member 14 is pivotably connected to a front end of the lower support member 12 by means of a lower hinge joint 16, so that the connection member 14 can rotate around a second transverse axis of rotation A2 relative to the lower support member 12. Thus, when moving from the lowered position to the tilted position, the upper support member 13 is on one hand tilted and on the other hand moved forward and upward with respect to the lower support member 12.

Stopping surfaces 17 are provided at the front end of the lower support member 12. The stopping surfaces 17 are configured to come into contact with corresponding stopping surfaces 18 provided on the second end of the connection member 14, so that a stopping mechanism that limits rotational motion around the second transverse axis of rotation A2 is provided. The stopping surfaces 17, 18 may e.g. be angled so as to limit the rotational motion to an angle α of maximum 150°, wherein the angle α is measured between the lower support member 12 and the connection member 14. Preferably, the stopping mechanism should allow the connection member 14 to be rotated to an angle α of more than 90°, so that the upper hinge joint 15 is located in front of the lower hinge joint 16 in a fully tilted position of the load 2. In this way, the load 2 is prevented from automatically returning to the lowered position from the fully tilted position. It should be noted that, in the tilted position shown in figs. 2-4, the load 2 is not fully tilted and the stopping surfaces 17, 18 are not yet in contact.

The rear attachment device 11 is provided with a locking mechanism for preventing unwanted movement when the load 2 is in the lowered position. The upper support member 13 is for this purpose provided with a rearward side portion 19 that, in the lowered position, extends downward past the connection member 14 and the lower support member 12. An opening 20 is provided in the rear side portion 19, which opening is in the lowered position located below the lower support member 12. A locking member (not shown) may be brought into engagement with the opening 20 so as to lock the support members 12, 13 together and prevent relative motion thereof when the rear attachment device 11 is in the lowered position. The locking member may be provided on the lower support member but may also be a separate element. Of course, a differently configured locking mechanism preventing relative motion of the support members in the lowered position may instead be provided.

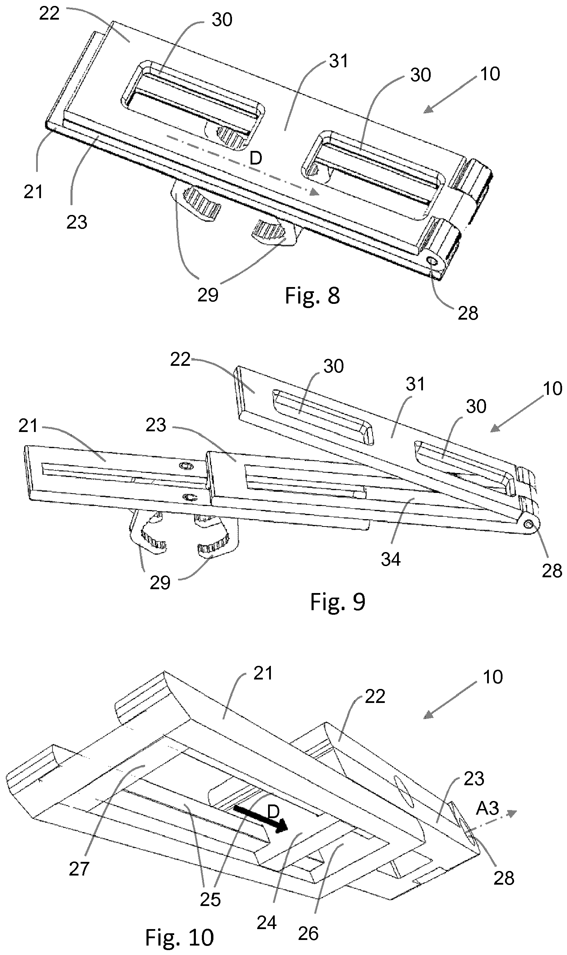

Reference is now made to figs. 8-10, showing the front attachment device 10 according to an embodiment in greater detail. Each of the front attachment devices 10 comprises a lower support member 21 configured to be supported by and attached to the front bar 8. It further comprises an upper support member 22 having a flat upper surface configured to support the load 2, and a connection member 23 connecting the lower and upper support members 21, 22. In the lowered position, shown in fig. 8, the upper support member 22, the connection member 23 and the lower support member 21 all have a primary extension in the longitudinal direction D. The connection member 23 is interposed between the upper support member 22 and the lower support member 21. In the shown embodiment, a sliding element 24 is provided on a rear end of the connection member 23. The sliding element 24 is adapted to slide along guide rails 25 provided on the lower support member 21, so that the connection member 23 is movable in the longitudinal direction D with respect to the lower support member 21 by means of sliding. Transverse elements 26, 27 are provided at a front end and a rear end of the lower support member 21, respectively, limiting the sliding motion. Of course, any suitable type of bearing can be used to enable longitudinal motion of the connection member relative to the lower support member.

At a front end, the connection member 23 of the front attachment device 10 is pivotably connected to a front end of the upper support member 22 by means of a hinge joint 28, so that the upper support member 22 can rotate around a third transverse axis of rotation A3 relative to the connection member 23 and thereby also to the lower support member 21. In the tilted position, shown in fig. 9, the upper support member 22 is tilted and moved forward with respect to the lower support member 21.

Stopping surfaces that limit the rotational motion around the axis A3 may be provided, but it is also possible with a construction without such stopping surfaces, since the rotational motion will automatically be limited by the rear attachment device 11.

Unlike the connection member 14 of the rear attachment device 11, the connection member 23 of the front attachment device 10 can in the shown embodiment not be rotated relative to the lower support member 12. However, it is possible to provide a front attachment member with a configuration similar to the rear attachment device, in which two hinge joints are provided at opposite ends of the connection member, so that an upward movement of the entire upper support member with respect to the lower support member is enabled.

In the shown embodiments, each one of the lower support members 12, 21 of both the rear attachment device 11 and the front attachment device 10 comprises two gripping members 29 configured to grip around the bars 8, 9 and be locked in a gripping position, so that the attachment devices 10, 11 may be rigidly connected to the bars 8, 9.

The upper support members 13, 22 of both the rear attachment device 11 and the front attachment device 10 each comprises two rectangular through-holes 30 defining a transverse bar element 31 in the upper support member 13, 22, around which bar element 31 fastening members (not shown) of the load 2 may grip. The underlying connection member 14, 23 of each attachment device 10, 11 is provided with a rectangular opening 34 (shown only in the front attachment device 10) that allows the fastening members to grip around the bar element 31.

When the load 2 is mounted on the roof rack of the vehicle 1 by means of the front and rear attachment devices 10, 11, it can be shifted from the lowered position to a tilted position by simply disengaging the locking member from the upper support member 13 of the rear attachment device 11 and pushing the load 2 upward/forward. The connection member 14 of the rear attachment device 11 is thereby rotated around the second axis of rotation A2, the hinge joints 15, 16 allowing the upper support member 12 to be moved upward and forward together with the load 2. At the same time, the upward and forward force acting on the load 2 forces the upper support member 22 of the front attachment device 10 to be rotated around the third axis of rotation A3 while the connection member 23 is slid forward. The load 2 is thereby moved from the lowered position shown in fig. 1 via the tilted position shown in figs. 2-3, into a fully tilted position (not shown) in which the rear portion 3 of the load 2 is elevated relative to the front portion 4 of the load 2 and in which the load 2 is shifted forward over the windscreen 5 of the vehicle 1. The closure 6 of the luggage compartment 7 can easily be fully opened when the load 2 is in the tilted position. By pulling on the rear portion 3 of the load 2, the load 2 can be brought back to the lowered position and the locking member(s) can be engaged, so that the load 2 is fixed in the lowered position.

The mounting system may also comprise a lifting aid for assisting a user of the mounting system when shifting the load from the lowered position to the tilted position. Such a lifting aid could e.g. be a spring, such as a gas spring, arranged at the front or rear attachment device.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A mounting system for mounting a load (2) on a roof rack of a vehicle (1), wherein the roof rack comprises a front bar (8) and a rear bar (9) extending transversely with respect to a longitudinal direction (D) of travel of the vehicle (1), wherein the mounting system comprises at least one front attachment device (10) for attaching the load (2) to the front bar (8) and at least one rear attachment device (11) for attaching the load (2) to the rear bar (9),
***characterised in***
**that** each of the attachment devices (10, 11) comprises:
- a lower support member (12, 21) configured to be supported by and attached to one of the front bar (8) and the rear bar (9),
- an upper support member (13, 22) configured to support the load (2),
- a connection member (14, 23) connecting the support members (12, 13, 21, 22) so that the upper support member (13, 22) is movable in the longitudinal direction (D) and pivotable around at least one transverse axis of rotation (A1, A2, A3) relative to the lower support member (12, 21)
wherein the connection member (14) of the rear attachment device (11) is further configured to allow an upward movement of the upper support member (13) relative to the lower support member (12), so that the load (2), when mounted on the roof rack, is movable between a lowered position in which the load (2) extends in or essentially in the longitudinal direction (D), and a tilted position in which the load (2) is tilted and moved forward with respect to the lowered position, so that a rear portion (3) of the load (2) is elevated relative to a front portion (4) of the load (2).

2. The mounting system according to claim 1, wherein, in the lowered position, all of the upper support members (13, 22) extend in parallel with or essentially in parallel with all of the lower support members (12, 21), and wherein, in the tilted position, all of the upper support members (13, 22) are tilted and moved forward with respect to all of the lower support members (12, 21), and wherein, in the tilted position, the upper support member (13) of the at least one rear attachment device (11) is elevated relative to the lower support member (12) of the at least one rear attachment device (11).

3. The mounting system according to claim 1 or 2, wherein the upper support member (13, 22) has a shape that allows a fastening member of the load (2), which fastening member is adapted to be engaged with the front bar (8) or the rear bar (9) of the roof rack, to be engaged with the upper support member (13, 22).

4. The mounting system according to any one of the preceding claims, wherein, in the lowered position, the connection member (14, 23) is interposed between the upper support member (13, 22) and the lower support member (12, 21).

5. The mounting system according to any one of the preceding claims, wherein the connection member of the at least one front attachment device is configured to allow an upward movement of the entire upper support member relative to the lower support member.

6. The mounting system according to any one of claims 1-4, wherein the connection member (23) of the at least one front attachment device (10) is configured to be movable only in the longitudinal direction (D) with respect to the lower support member (21).

7. The mounting system according to claim 6, wherein the connection member (23) of the at least one front attachment device (10) is configured to be movable in the longitudinal direction (D) by means of sliding.

8. The mounting system according to any one of the preceding claims, wherein the at least one rear attachment device (11) further comprises a locking mechanism for preventing relative movement of the support members (12, 13) in the lowered position.

9. The mounting system according to any one of the preceding claims, wherein the connection member (14) of the at least one rear attachment device (11) has a first end pivotably connected to a rear end of the upper support member (13), and a second end pivotably connected to a front end of the lower support member (12).

10. The mounting system according to any one of the preceding claims, wherein the at least one rear attachment device (11) comprises a stopping mechanism configured to limit rotational motion of the connection member (14) relative to the lower support member (12).

11. The mounting system according to any one of the preceding claims, comprising at least two rear attachment devices (11) and at least two front attachment devices (10).
